# EUROPÄISCHE PATENTSCHRIFT

(11) **EP 3 055 608 B1**
(45) Veröffentlichungstag und Bekanntmachung des Hinweises auf die Patenterteilung: **06.12.2017**
(21) Anmeldenummer: 14780812.5
(22) Anmeldetag: 29.09.2014
(51) Int. Cl.: F17C 13/04, F17C 13/12

(54) **SICHERHEITSEINRICHTUNG EINES DRUCKGASTANKS INSBESONDERE EINES KRAFTFAHRZEUGS**
SAFETY DEVICE FOR A PRESSURIZED GAS TANK, IN PARTICULAR OF A MOTOR VEHICLE
SYSTÈME DE SÉCURITÉ D'UN RÉSERVOIR DE GAZ SOUS PRESSION, EN PARTICULIER D'UN VÉHICULE AUTOMOBILE

(30) Priorität: 09.10.2013 DE 102013220388
(43) Veröffentlichungstag der Anmeldung: 17.08.2016
(73) Patentinhaber: Bayerische Motoren Werke Aktiengesellschaft, 80809 München (DE)
(72) Erfinder: KUNBERGER, Jan-Mark, 81241 München (DE)
(86) Internationale Anmeldenummer: PCT/EP2014/070762
(87) Internationale Veröffentlichungsnummer: WO 2015/052025

(56) Entgegenhaltungen:
- DE-A1-102007 022 610

## Beschreibung

Die Erfindung betrifft eine Sicherheitseinrichtung eines Druckgastanks insbesondere eines Kraftfahrzeugs mit einer auf einem größeren Oberflächenbereich des Tanks vorgesehenen thermoelektrischen Einrichtung, die unter Wärmeeinwirkung elektrische Energie bereit stellt, welche bei geeigneter Systemauslegung direkt oder indirekt eine Druckentlastungseinrichtung des Tanks ansteuert, um eine wärmebedingte Schädigung des Tanks zu vermeiden.

Eine solche Sicherheitseinrichtung ist in der DE 10 2007 022 610 B4 beschrieben und es weist dieser bekannte Stand der Technik eine sog. Thermobatterie mit einem unter normalen Umgebungsbedingungen gefrorenen und daher nicht ionenleitfähigen Elektrolyten auf. Bei höherem Wärmeeinfall, beispielsweise im Falle eines Brandes oder anderweitig zunehmend hohen Temperaturen in der nächsten Nähe des Tanks erwärmt sich dieser und damit auch die thermoelektrische Batterie aufgrund geeigneter Systemauslegung soweit, dass sie dann eine solche Menge von elektrischem Strom bereit stellt, die ein Druckentlastungsventil des Tanks dann öffnet, wenn die maximale sichere Betriebstemperatur des Tanks überschritten ist, woraufhin das im Tank gespeicherte Druckgas aus diesem entweichen kann. Damit wird der Tank-Raum entlastet, bevor die Struktur des Tanks durch die Wärmeentwicklung in dessen Nähe beträchtlichen Schaden nimmt. Indem die besagte Thermobatterie einen beträchtlichen Abschnitt der Oberfläche des Tanks bedeckt, ist der Tank damit umfassender gegen intensivere Wärmequellen geschützt.

In der DE 10 2013 002 777 A1 ist eine Vorrichtung zum Speichern von Gas unter hohem Druck beschrieben, mit einem Druckgasbehälter und einer Ventileinrichtung sowie einer Sicherheitsabblase-Einrichtung und einer Auslöseeinheit hierfür, welche eine Pyroladung zum zumindest mittelbaren Auslösen der Sicherheitsabblase-Einrichtung aufweist, wobei die Pyroladung elektrisch mittels wenigstens eines thermoelektrischen Generators zur Zündung verbunden ist.

Die für ein erfolgreiches Arbeiten der aus der erstgenannten DE 10 2007 022 610 B4 bekannten Sicherheitseinrichtung erforderliche Systemauslegung dürfte sehr schwierig aufzufinden sein; ferner ist derzeit kaum vorstellbar, wie eine entsprechende Thermobatterie unter insbesondere für einen Einsatz in einem Kraftfahrzeug vertretbarem Bauaufwand einen größeren Oberflächenbereich des Tanks bedecken kann. Daher soll vorliegend eine demgegenüber verbesserte Sicherheitseinrichtung nach dem Oberbegriff des Anspruchs 1 aufgezeigt werden (= Aufgabe der vorliegenden Erfindung).

Die Lösung dieser Aufgabe ist dadurch gekennzeichnet, dass die thermoelektrische Einrichtung durch eine Vielzahl miteinander verschalteter thermoelektrischer Generatoren gebildet ist, deren durch Wärmeeinwirkung erzeugte elektrische Energie einer elektrischen und/oder elektronischen Speichereinheit zugeführt wird, deren beide Pole oder Elektroden über einen Entladewiderstand verbunden sind, wobei die Systemauslegung derart getroffen ist, dass eine bestimmte Leistungsdifferenz zwischen der von den thermoelektrischen Generatoren erzeugten Leistung und der im Entladewiderstand vernichteten Leistung direkt oder über eine elektrische oder elektronische Schalt-Anordnung indirekt die Ansteuerung der Druckentlastungseinrichtung bewirkt.

Nach vorteilhaften Weiterbildungen der Erfindung kann die elektrische und/oder elektronische Speichereinheit zumindest einen Kondensator enthalten und/oder es kann ein in Abhängigkeit von der in der besagten Speichereinheit vorliegenden elektrischen Spannung schließender Schalter in einem die in dieser Speichereinheit gespeicherte elektrische Energie einer elektrisch betätigbaren Druckentlastungseinrichtung zuführenden elektrischen Schaltkreis vorgesehen sein.

Anstelle einer in der o.g. Schrift genannten Thermobatterie sind vorliegend eine Vielzahl von thermoelektrischen Generatoren vorgesehen, die sich bekanntlich - jeder für sich - durch kompakte Bauweise auszeichnen und die folglich einfach auf der Oberfläche des Tanks in einer solchen Vielzahl verteilbar bzw. verteilt sind, dass nicht nur ein kleiner Oberflächenabschnitt des Tanks abgedeckt ist, sondern ein größerer Oberflächenbereich desselben. Damit ist sichergestellt, dass auch ein hoher "punktueller" Wärmeeintrag bzw. eine intensive Wärmeeinwirkung auf die Außenwand des Tanks an nur einer kleinen Stelle derselben mit Sicherheit von der Sicherheitseinrichtung registriert wird, indem zumindest einer oder wenige der thermoelektrischen Generatoren als Folge eines hohen Wärmeeintrags in nennenswertem Umfang elektrische Energie erzeugen bzw. bereitstellen.

Weiterhin ist eine Speichereinheit für elektrische Energie bspw. in Form einer elektrische Kondensator-Schaltung, d.h. einem Kondensator oder mehrere geeignet miteinander verschaltete Kondensatoren, vorgesehen, die mit den geeignet (d.h. parallel und/oder in Reihe) miteinander verschalteten thermoelektrischen Generatoren verbunden ist, so dass die bei Wärmeeinfall in den thermoelektrischen Generatoren erzeugte elektrische Energie in den oder die besagte und dabei elektrisch oder elektronisch ausgebildete Speichereinheit gelangt. in dieser Speichereinheit, bspw. in dem oder den Kondensator(en) wird somit die von den thermoelektrischen Generatoren erzeugte elektrische Leistung zwischengespeichert und damit aufsummiert, wodurch als wesentlicher Aspekt der vorliegenden Erfindung die Zeitdauer, über welche ein zu berücksichtigender Wärmeeinfall auf den Tank erfolgt, mitberücksichtigt werden kann bzw. mitberücksichtigt wird. Jedoch darf dieses Aufsummieren der in den thermoelektrischen Generatoren erzeugten elektrischen Leistung selbstverständlich nicht zeitlich unbeschränkt erfolgen, sondern muss auf ein gewisses Zeitintervall beschränkt bleiben, weshalb erfindungsgemäß die beiden Pole bzw. gegenpoligen Elektroden der besagten Speichereinheit (bspw. Kondensatoren) über einen Entladewiderstand miteinander verbunden sind, so dass kontinuierlich auch eine gewisse Entladung der Speichereinheit (bzw. des oder der Kondensatoren) erfolgt. Das gesamte System, d.h. die thermoelektrischen Generatoren und die besagte Speichereinheit sowie der Entladewiderstand ist bzw. sind nun gesamthaft betrachtet solchermaßen ausgelegt, dass eine bestimmte positive Leistungsdifferenz zwischen der von den thermoelektrischen Generatoren erzeugten Leistung und der im Entladewiderstand vernichteten Leistung direkt oder über eine elektrisch/elektronische Schaltung (im Anspruch als Schalt-Anordnung bezeichnet und bspw. als Relaisschaltung ausgebildet, die aber auch über Transistoren oder dgl. realisiert sein kann) indirekt die Ansteuerung der Druckentlastungseinrichtung bewirkt. Diese im Falle eines signifikanten Wärmeeinfalls auf zumindest einige der thermoelektrischen Generatoren positive Leistungsdifferenz (d.h. es wird eine höhere Leistung erzeugt als im Entladewiderstand vernichtet wird) wird dabei zunächst in der besagten Speichereinheit (bspw. den Kondensatoren) gespeichert, wobei die elektrische Spannung zwischen den elektrischen Polen (bspw. gegenpoligen Kondensator-Elektroden) ansteigt. Ist ein bestimmter und durch die Systemauslegung vorgegebener Spannungswert erreicht, so führt dies zu einer geeigneten Ansteuerung einer Druckentlastungseinrichtung des Tanks, woraufhin zumindest eine Teilmenge des darin gespeicherten Druckgases aus diesem entweichen kann.

Dabei kann die Druckentlastungseinrichtung elektrisch betätigt sein und direkt von der in der besagten Speichereinheit gespeicherten elektrischen Energie nicht nur angesteuert, sondern auch mit der für das Öffnen der Druckentlastungseinrichtung benötigten Energie versorgt werden; alternativ kann eine geeignete elektrische bzw. elektronische Schaltanordnung vorgesehen sein, welche bei Erreichen eines bestimmten Spannungswertes zwischen den elektrischen Polen der Speichereinheit die Druckentlastungseinrichtung, die bspw. in Form einer Zündkapsel(= elektrisch ausgelöste Sprengkapsel) ausgeführt sein kann, geeignet ansteuert.

Vorzugsweise können organische thermoelektrische Generatoren (vgl. bspw. DE 10 2007 022 610 B4 oder folgenden internet-Link: *http:*//*www.pro-physik.de*/*details*/*news*/*1429801*/*Strom_aus_Kunststoff.html*) zum Einsatz kommen, die elastisch und somit verformbar und an gekrümmte Oberflächen anpassbar sind und vorteilhafterweise unempfindlich sind gegenüber Vibrationen und Stößen. Ferner ist deren Geometrie weitgehend frei einstellbar, so dass auch der gewünschte thermische Systemwiderstand nahezu optimal angepasst werden kann. Derzeit bekannte organische thermoelektrische Generatoren sind für den hier vorgeschlagenen Einsatz ausreichend temperaturstabil und beliebig parallel oder seriell verschaltbar, um den Innenwiderstand und die Ausgangsspannung der gewünschten Systemauslegung entsprechend anpassen zu können.

Weiterhin kann eine erfindungsgemäße Sicherheitseinrichtung insbesondere dann, wenn im Druckgastank ein brennbares Gas gespeichert ist, mit einer elektrischen Zündeinrichtung für das über die im Gefahrenfall ausgelöste Druckentlastungsentrichtung aus dem Druckgastank austretende Gas versehen sein, wobei die Zünd-Energie für die Zündeinrichtung aus der besagten elektrischen und/oder elektronischen Speichereinheit abgezogen wird.

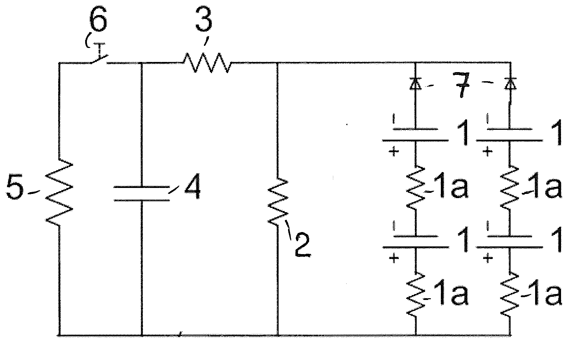

Die beigefügte einzige Figur zeigt als Ausführungsbeispiel der vorliegenden Erfindung auf das wesentliche vereinfacht einen elektrischen Schaltkreis mit mehreren thermoelektrischen Generatoren 1, die mit ihren Systemwiderständen 1a vorliegend teils parallel und teils seriell miteinander verschaltet und unter Zwischenschaltung von Dioden 7 über einen Vorladewiderstand 3 gesamthaft mit einer elektrischen und/oder elektronischen Energie-Speichereinheit 4, hier in Form einer zumindest einen elektrischen Kondensator aufweisenden Kondensator-Schaltung 4, verbunden sind. Die gegenpolige Elektroden dieser Kondensator-Schaltung 4 bzw. des einzigen hier figürlich gezeigten Kondensators 4 sind über einen Entladewiderstand 2 miteinander verbunden. An diese Kondensator-Schaltung 4 (bzw. die elektrischen Pole der besagten elektrischen Energie-Speichereinheit 4) angeschlossen ist ferner ein die hier elektrisch betätigbare Druckentlastungseinrichtung 5 des nicht gezeigten Druckgastanks eines Kraftfahrzeugs und weiterhin einen spannungsabhängig schließenden Schalter 6 enthaltender Schaltkreis.

Die thermoelektrischen Generatoren 1 sind über der Oberfläche eines bzw. des zu überwachenden Druckgastanks verteilt und vorzugsweise auf dieser Oberfläche selbst angebracht. Bei erhöhter Temperatur an dieser Tank-Oberfläche wird in den thermisch beaufschlagten thermoelektrischen Generatoren 1 elektrische Spannung erzeugt, die über die Dioden 7 und den Vorladewiderstand 3 in den Kondensator 4 (bzw. in die Kondensator-schaltung 4) gelangt. Solange kein nennenswerter Wärmeeintrag oder allenfalls ein sehr geringer Wärmeeintrag auf die thermoelektrischen Generatoren 1 erfolgt und somit allenfalls nur eine geringe Beladung des Kondensators 4 stattfindet, wird dieser Kondensator 4 über den Vorladewiderstand 3 und den Entladewiderstand 2 dauerhaft im entladenen Zustand gehalten. Liegt jedoch ein sog. "thermisches Ereignis" vor, d.h. sind der Druckgastank und somit thermische Generatoren 1 einem größerem Wärmeeintrag ausgesetzt, so kann die in diesen thermischen Generatoren 1 erzeugte elektrische Leistung dauerhaft größer als die über den Entladewiderstand 2 vernichtete Leistung sein und es wird über eine gewisse Zeitdauer betrachtet der Kondensator 4 bis zu einer Grenzspannung aufgeladen. Bei Erreichen dieser Grenzspannung wird der zunächst offene Schalter 6, der bspw. in Form eines Logikbaustein ausgeführt sein kann, geschlossen und es wird daraufhin die im Kondensator 4 gespeicherte elektrische Energie zur Auslösung der Druckentlastungseinrichtung 5 verwendet.

Mit der hier vorgestellten Sicherheitseinrichtung kann somit die Einwirkung einer hohen Temperatur auf einen Druckgastank über eine kritische Zeitdauer einfach und sicher festgestellt werden, wobei die komplette Oberfläche des Druckgastanks, ähnlich einer Haut, überwachbar ist. Die vorgestellte Sicherheitseinrichtung arbeitet vorteilhafterweise autark, d.h. ohne Verwendung von bereitzustellender Fremdenergie und es erfolgt nach Detektion eines auch unter zeitlicher Betrachtung kritischen Wärmeeintrags eine vom Fahrzeug, in welchem der Druckgastank verbaut ist, unabhängige Druckentlastung dieses Druckgastanks. Möglich ist somit eine lückenlose Überwachung der Tank-Oberfläche und es wird die benötigte elektrische Energie durch den unerwünschten Wärmeeintrag - üblicherweise in Folge eines Brandes - selbst generiert. Im übrigen sind die weiterhin vorgeschlagenen organischen thermoelektrischen Generatoren durch 3D-Drucktechnologie einfach darstellbar und es könnte mit der vorgestellten Sicherheitseinrichtung ggf. auch eine Überwachung der kritischen Temperatur bei der Befüllung des Druckgastanks durchgeführt werden.

## Patentansprüche

1. Sicherheitseinrichtung eines Druckgastanks insbesondere eines Kraftfahrzeugs, mit einer auf einem größeren Oberflächenbereich des Tanks vorgesehenen thermoelektrischen Einrichtung, die unter Wärmeeinwirkung elektrische Energie bereit stellt, welche bei geeigneter Systemauslegung direkt oder indirekt eine Druckentlastungseinrichtung (5) des Tanks ansteuert, um eine wärmebedingte Schädigung des Tanks zu vermeiden,
**dadurch gekennzeichnet, dass** die thermoelektrische Einrichtung durch eine Vielzahl miteinander verschalteter thermoelektrischer Generatoren (1) gebildet ist, deren durch Wärmeeinwirkung erzeugte elektrische Energie einer elektrischen und/oder elektronischen Speichereinheit (4) zugeführt wird, deren beide Pole oder Elektroden über einen Entladewiderstand (2) verbunden sind, wobei die Systemauslegung derart getroffen ist, dass eine bestimmte Leistungsdifferenz zwischen der von den thermoelektrischen Generatoren (1) erzeugten Leistung und der im Entladewiderstand (2) vernichteten Leistung direkt oder über eine elektrische oder elektronische Schalt-Anordnung indirekt die Ansteuerung der Druckentlastungseinrichtung (5) bewirkt.

2. Sicherheitseinrichtung nach Anspruch 1, wobei die elektrische und/oder elektronische Speichereinheit (4) zumindest einen Kondensator (4) enthält.

3. Sicherheitseinrichtung nach Anspruch 1 oder 2 mit einem in Abhängigkeit von der in der elektrischen und/oder elektronischen Speichereinheit (4) vorliegenden elektrischen Spannung schließenden Schalter (6) in einem die in der Speichereinheit (4) gespeicherte elektrische Energie einer elektrisch betätigbaren Druckentlastungseinrichtung (5) zuführenden elektrischen Schaltkreis.

4. Sicherheitseinrichtung nach einem der vorangegangenen Ansprüche mit organischen thermoelektrischen Generatoren (1).

5. Sicherheitseinrichtung nach einem der vorangegangenen Ansprüche mit einer elektrischen Zündeinrichtung für das über die Druckentlastungsentrichtung (5) aus dem Druckgastank austretende Gas, welche die Zünd-Energie aus der besagten elektrischen und/oder elektronischen Speichereinheit (4) erhält.

## Claims

1. A safety device for a pressurised gas tank, more especially of a motor vehicle,
having a thermoelectric device, which is provided on a large surface region of the tank and which provides electrical energy when, exposed to heat, which directly or indirectly actuates a pressure relief device (5) of the tank with suitable system design so as to avoid heat-induced damage to the tank,
**characterised in that** the thermoelectric device is formed by a multiplicity of thermoelectric generators (1) connected to one another, of which the electrical energy generated by exposure to heat is fed to an electrical and/or electronic memory unit (4), of which both poles or electrodes are connected via a discharge resistor (2), wherein the system design is such that a specific power difference between the power generated by the thermoelectric generators (1) and the power lost in the discharge resistor (2) actuates the pressure relief device (5) directly or indirectly via an electrical or electronic circuit arrangement.

2. A safety device according to claim 1, wherein the electrical and/or electronic memory unit (4) contains at least one capacitor (4).

3. A safety device according to claim 1 or 2, with a switch (6) in an electrical circuit feeding the electrical energy stored in the memory unit (4) to an electrically actuatable pressure relief device (5), which switch closes depending on the electrical voltage present in the electrical and/or electronic memory unit (4).

4. A safety device according to any one of the preceding claims, with organic thermoelectric generators (1).

5. A safety device according to any one of the preceding claims, with an electrical ignition device for the gas exiting the pressurised gas tank via the pressure relief device (5), which ignition device obtains the ignition energy from said electrical and/or electronic memory unit (4).

## Revendications

1. Dispositif de sécurité destiné à un réservoir de gaz comprimé, en particulier d'un véhicule comprenant un dispositif thermoélectrique situé sur la plus grande partie de la surface du réservoir, qui fournit, sous l'action de la chaleur, de l'énergie électrique qui commande, directement ou indirectement pour une conformation adaptée du système, un dispositif de détente (5) du réservoir pour éviter un endommagement causé par la chaleur de ce réservoir,
**caractérisé en ce que**
le dispositif thermoélectrique est formé par un ensemble de générateurs thermoélectriques (1) interconnectés dont l'énergie électrique produite sous l'action de la chaleur, est transmise à une unité d'accumulation électrique et/ou électronique (4) dont les deux pôles ou électrodes sont reliés par l'intermédiaire d'une résistance de décharge (2), la conformation du système étant telle qu'une différence de puissance déterminée entre la puissance produite par les générateurs thermoélectriques (1) et la puissance consommée dans la résistance de décharge (2) entraîne directement ou indirectement par l'intermédiaire d'un dispositif de commutation électrique ou électronique, la commande du dispositif de détente (5).

2. Dispositif de sécurité conforme à la revendication 1, dans lequel l'unité d'accumulation électrique et/ou électronique (4) comporte au moins un condensateur (4).

3. Dispositif de sécurité conforme à la revendication 1 ou 2, comportant un commutateur (6) de fermeture, en fonction de la tension électrique présente dans l'unité d'accumulation électrique et/ou électronique (4) monté dans un circuit de commutation électrique transférant l'énergie électrique accumulée dans l'unité d'accumulation (4) à un dispositif de détente (5) actionnable électriquement.

4. Dispositif de sécurité conforme à l'une des revendications précédentes comportant des générateurs thermoélectriques organiques (1).

5. Dispositif de sécurité conforme à l'une des revendications précédentes comprenant un dispositif d'allumage électrique du gaz sortant du réservoir de gaz comprimé par le dispositif de détente (5), qui obtient l'énergie d'allumage à partir de l'unité d'accumulation électrique et/ou électronique (4).
